# EUROPÄISCHE PATENTSCHRIFT

(11) **EP 2 089 945 B1**
(45) Veröffentlichungstag und Bekanntmachung des Hinweises auf die Patenterteilung: **04.07.2012**
(21) Anmeldenummer: 07821552.2
(22) Anmeldetag: 19.10.2007
(51) Int. Cl.: H02B 1/18, H02B 1/21

(54) **MEHRPHASIGES STRANGSICHERUNGS-MODUL**
MULTIPHASE LINE FUSE MODULE
MODULE DE FUSIBLE DE PROTECTION DE LIGNE, À PHASES MULTIPLES

(30) Priorität: 11.12.2006 DE 102006058328
(43) Veröffentlichungstag der Anmeldung: 19.08.2009
(73) Patentinhaber: Siemens Aktiengesellschaft, 80333 München (DE)
(72) Erfinder: HIRSCHFELD, Thomas, 90559 Burgthann (DE)
(86) Internationale Anmeldenummer: PCT/EP2007/061188
(87) Internationale Veröffentlichungsnummer: WO 2008/071492

(56) Entgegenhaltungen:
- EP-A- 0 013 963
- EP-A- 0 171 060
- EP-A- 0 944 145
- EP-B- 0 883 888
- DE-A1- 19 511 350
- US-A- 5 148 139

## Beschreibung

Die Erfindung bezieht sich auf ein mehrphasiges Strangsicherungs-Modul.

Aus der DE 19511350 ist eine mehrphasige Schaltanlage mit einem Schienenkanal, Schaltgeräten, einer Stromzuleitung und einer Stromableitung bekannt. Als Zuleitungen sind Stromschienen vorgesehen, die ein Stromschienenpaket mit stirn- und schmalseitigen Anschlüssen bilden. Die Schaltgeräte sind räumlich übereinander in Front der schmalseitigen Anschlüsse des Stromschienenpaketes angeordnet und mit diesen schmalseitigen Anschlüssen elektrisch leitend verbunden.

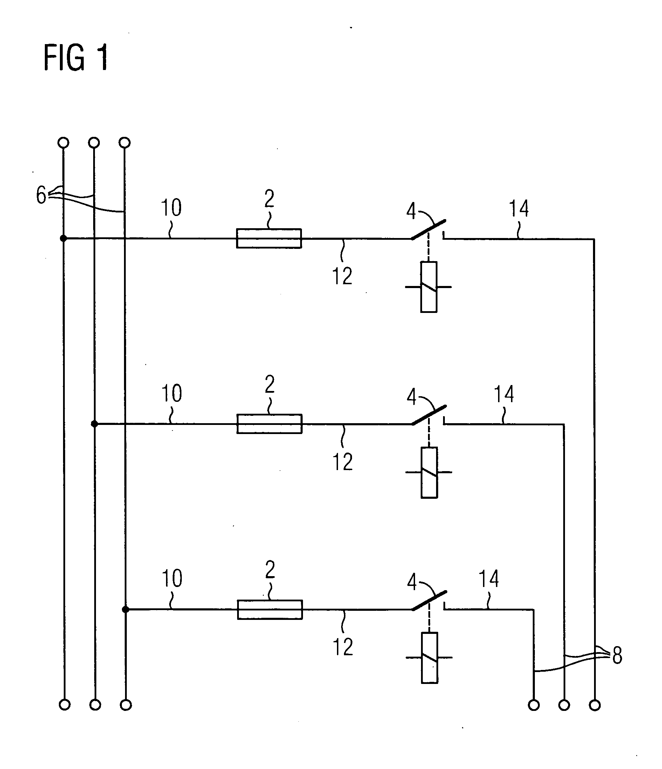

In der Fig. 1 ist ein Stromlaufplan für die mehrphasige Verschaltung von Strangsicherungen 2 mit zugehörigen Wechselstromschützen 4 näher dargestellt. Damit diese Reihenschaltungen von jeweils einer Strangsicherung 2 und einem Wechselstromschütz 4 mit anderen elektrischen Einheiten verbunden werden können, sind pro Phase eine Wechselstrom-Zuleitung 6 und eine Wechselstrom-Ableitung 8 vorgesehen. Jede Strangsicherüng 2 ist mit einer Verbindungsleitung 10 mit einer Wechselstrom-Zuleitung 6 und mittels einer weiteren Verbindungsleitung 12 mit dem zugehörigen Wechselstromschütz 4 elektrisch leitend verbunden. Jedes Wechselstromschütz 4 ist außerdem mittels einer weiteren Verbindungsleitung 14 mit einer Wechselstrom-Ableitung 8 elektrisch leitend verbunden.

Bei der Realisierung eines derartigen Stromlaufplans sind die Strangsicherungen 2 und die Wechselstromschütze 4 und die Wechselstrom-Zu- und Ableitungen 6 und 8 bisher in einem Gehäuse bzw. Schaltschrank untergebracht, wobei Halterungen für die Befestigung der Bauelemente vorgesehen sind. Wegen der Einhaltung der Luft- und Kriechstrecken sind diese Bauelemente entsprechend weit voneinander innerhalb dieses Gehäuses angeordnet. Wegen dieser Anordnung dieser Bauelemente ist der Anspruch auf Platz innerhalb eines Gehäuses bzw. Schaltschrankes sehr hoch. Außerdem ist der Montageaufwand recht hoch, da diese Bauelemente einzeln verdrahtet werden. Dabei kann eine Fehlverdrahtung auftreten, die erst bei der Inbetriebnahme einer an diesen Schützen 4 angeschlossenen elektrischen Einheit infolge eines Kurzschlusses entdeckt wird.

Der Erfindung liegt nun die Aufgabe zugrunde, die Verschaltung der Bauelemente derart vorzunehmen, dass die zuvor genannten Nachteile nicht mehr auftreten.

Diese Aufgabe wird erfindungsgemäß dadurch gelöst, dass ein mehrphasiges Strangsicherungs-Modul nach Anspruch 1 vorgesehen ist. Erfindungsgemäß weist dieses Strangsicherungs-Modul die bekannten Bauelemente des Stromlaufplans gemäß Fig. 1 auf, die jedoch in einem einfach aufgebauten Modulgehäuse untergebracht sind. Dazu sind die Wechselstrom-Zu- und Ableitungen 6 und 8, die jeweils als Stromschienen ausgebildet sind, zu einem Stromschienenpaket mit stirn- und schmalseitigen Anschlüssen gestapelt. Die Bauelemente einer Phase werden übereinander zu einer Phasenbaugruppe angeordnet, wobei diese Phasenbaugruppen einerseits übereinander in Front auf eine Schmalseite des Stromschienenpakets angeordnet werden, die die schmalseitigen Anschlüsse aufweist. Damit Bauelemente einer jeden Phase in der genannten räumlichen Anordnung zum Stromschienenpaket angeordnet werden können, sind zwei Tragplatten vorgesehen, die mit dem Stromschienenpaket lösbar verbunden sind. Damit niemand Teile dieses erfindungsgemäßen Strangsicherungs-Moduls berühren kann, weist dieses Modul frontseitig mehrere Abdeckungen auf.

Dieses erfindungsgemäße Strangsicherungs-Modul weist eine Breite auf, die der Breite des Stromschienenpaketes entspricht. Außerdem sind die Strangsicherungen und die Wechselstromschütze platzsparend in einem Gehäuse untergebracht. Dieses Strangsicherungs-Modul kann gesondert hergestellt und auf Fehlverdrahtung separat geprüft werden. Dadurch wird dieses Strangsicherungs-Modul als geprüfte Baueinheit in einer elektrischen Einheit verwendet. Ein weiterer Vorteil dieses Strangsicherungs-Moduls besteht darin, dass ausgefallene Bauelemente einer Phase dieses Strangsicherungs-Moduls mit einem geringen Aufwand gegen funktionstüchtige ausgetauscht werden können.

Vorteilhafte Ausgestaltungen dieses mehrphasigen Strangsicherungs-Moduls sind den abhängigen Ansprüchen zu entnehmen.

Zur weiteren Erläuterung der Erfindung wird auf die Zeichnung Bezug genommen, in der eine Ausführungsform eines erfindungsgemäßen mehrphasigen Strangsicherungs-Moduls schematisch veranschaulicht ist.
- Fig. 1: zeigt einen Stromlaufplan für die mehrpolige Verschaltung von Strangsicherungen mit zugehörig zugeordneten Wechselstromschützen, die
- Fig. 2: zeigt eine perspektivische Sicht einer Tragplatte von links eines mehrphasigen Strangsicherungs-Moduls nach der Erfindung, die
- Fig. 3: zeigt eine perspektivische Sicht zweier einander zugeordneter Tragplatten eines mehrphasigen Strangsicherungs-Moduls nach der Erfindung, in der
- Fig. 4: ist eine Seitenansicht eines bestückten mehrphasigen Strangsicherungs-Moduls nach der Erfindung ohne eine zweite Tragplatte dargestellt, in der
- Fig. 5: ist dieses bestückte mehrphasige Strangsicherungs-Modul nach Fig. 4 perspektivisch dargestellt, wobei zusätzlich frontseitig Abdeckungen und Versteifungsmittel vorgesehen sind, und die
- Fig. 6: zeigt eine perspektivische Sicht eines bestückten mehrphasigen Strangsicherungs-Moduls nach der Erfindung.

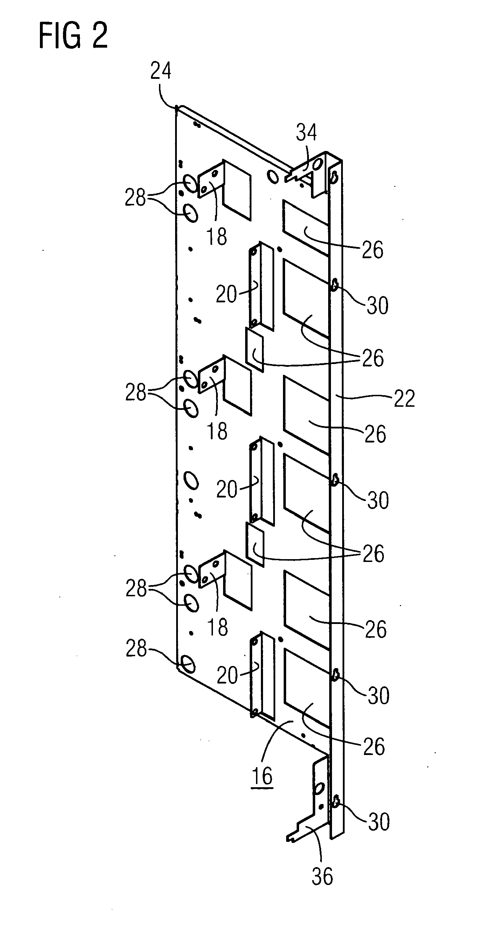

Die Fig. 2 zeigt in perspektivischer Sicht eine Tragplatte 16 eines mehrphasigen Strangsicherungs-Moduls nach der Erfindung. Bei dieser Tragplatte 16 handelt es sich um die linke Tragplatte des erfindungsgemäßen Moduls. Diese Tragplatte 16 weist mehrere Befestigungsfahnen 18 und 20 auf, die aus der Ebene der Tragplatte 16 durch Abkantungen entstanden sind. Außerdem weist diese Tragplatte 16 eine rückwärtige und eine frontseitige Befestigungsfahne 22 und 24 auf. Diese Befestigungsfahnen 22 und 24 sind ebenfalls durch Abkantungen aus der Tragplatte 16 entstanden. Ferner weist diese Tragplatte 16 noch Durchbrüche 26 und Bohrungen 28 auf. Die Durchbrüche 26 dienen zur Lüftung des Stromschienenpaketes 32, wobei die Bohrungen 28 bei der Verdrahtung Verwendung finden. Damit dieses mehrphasige Strangsicherungs-Modul an einer Montageplatte einer elektrischen Einheit befestigt werden kann, weist die rückwärtige Befestigungsfahne 22 wenigstens zwei Bohrungen 30 auf. Zur Fixierung eines Stromschienenpaketes 32 des mehrphasigen Strangsicherungs-Moduls weist diese Tragplatte oben und unten einen Teil 34 und 36 einer oberen und unteren Querstrebe 38 und 40 des mehrphasigen Strangsicherungs-Moduls auf.

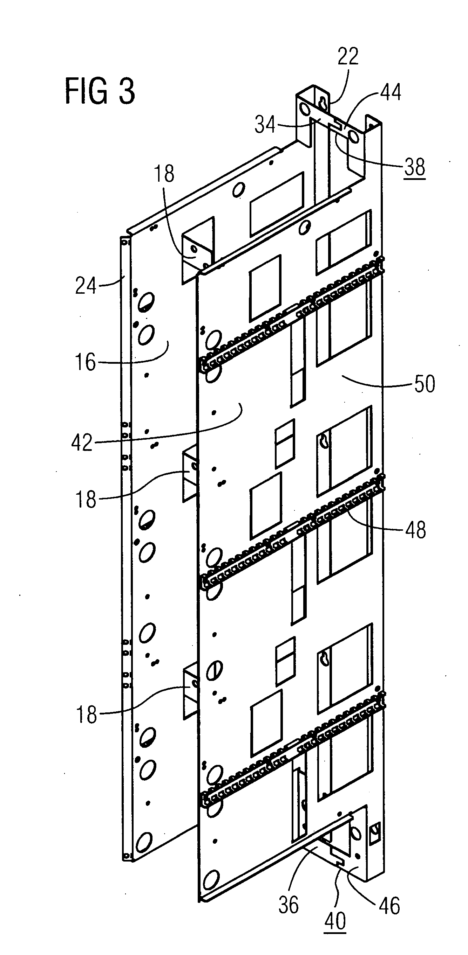

In der Fig. 3 ist von dem mehrphasigen Strangsicherungs-Modul nach der Erfindung nur die beiden Tragplatten 16 und 42 perspektivisch dargestellt. Die rechte Tragplatte 42 ist identisch zur Tragplatte 16 ausgebildet. In dieser Darstellung ist auch die obere und untere rückwärtige Querstrebe 38 und 40 zu erkennen. Diese obere bzw. untere Querstrebe 38 bzw. 40 besteht aus zwei Teilen 34 und 44 bzw. 36 und 46, die derart ausgebildet sind, dass diese im zusammengebauten Zustand des mehrphasigen Strangsicherungs-Moduls formschlüssig ineinander greifen. In dieser perspektivischen Sicht ist zu erkennen, dass die Tragplatte 42, ebenso wie die Tragplatte 16, Versteifungsmittel 48 aufweist. Diese Versteifungsmittel 48 sind auf einer Flachseite 50 der Tragplatte 42 übereinander angeordnet. Als Versteifungsmittel 48 ist ein U-Profil vorgesehen, deren Schenkel eine Vielzahl von Durchbrüchen aufweist.

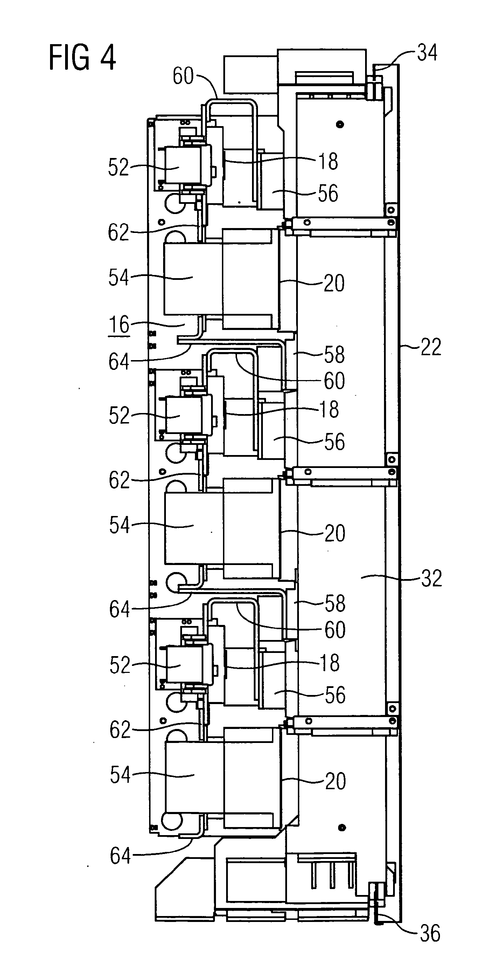

Die Fig. 4 zeigt eine Seitenansicht eines bestückten mehrphasigen Strangsicherungs-Moduls nach der Erfindung, wobei die rechte Tragplatte 42 abgenommen ist. Diese Seitenansicht zeigt ein Stromschienenpaket 32 und eine Strangsicherung 52 mit zugehörigem Wechselstromschütz 54 einer jeden Phasenbaugruppe. In diesem mehrphasigen Strangsicherungs-Modul sind drei Phasenbaugruppen übereinander in Front auf einer Schmalseite des Stromschienenpakets 32 angeordnet. Diese Schmalseite des Stromschienenpakets 32 weist mehrere schmalseitige Anschlüsse 56 und 58 auf. An den Anschlüssen 56 ist jeweils ein Anschluss einer Sicherung 52 angeschlossen, wogegen am Anschluss 58 ein Anschluss eines Wechselstromschützes 54 angeschlossen ist. Um jeweils eine Sicherung 52 mit einem schmalseitigen Anschluss 56 elektrisch leitend zu verbinden, sind gemäß Fig. 1 Verbindungsleitungen 10 vorgesehen. Als Verbindungsleitungen 10 werden Stromschienenstücke 60 verwendet. Gemäß Fig. 1 sind eine Strangsicherung 2 und ein zugehöriges Wechselstromschütz 4 mittels einer weiteren Verbindungsleitung 12 miteinander elektrisch in Reihe geschaltet. Diese weitere Verbindungsleitung 12 ist im mehrphasigen Strangsicherungs-Modul durch ein Stromschienenstück 62 verwirklicht. Die elektrische Verbindung eines Wechselstromschützes 4 mit einer Wechselstrom-Ableitung 8 wird entsprechend dem Stromlaufplan gemäß Fig. 1 mit einer weiteren Verbindungsleitung 14 hergestellt. In der Fig. 4 wird diese Verbindungsleitung 14 ebenfalls durch ein Stromschienenstück 64 realisiert.

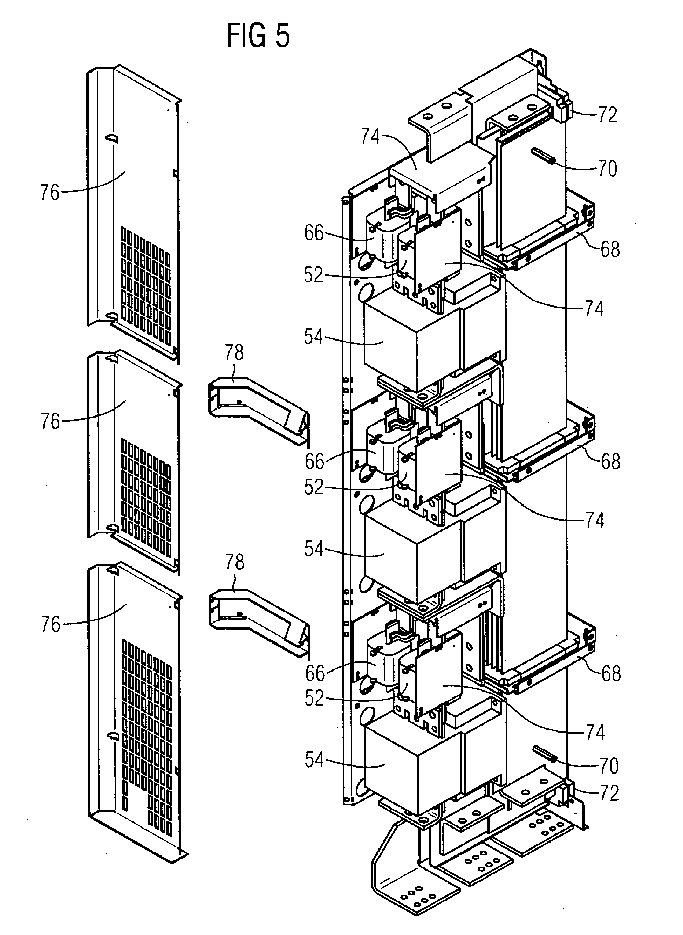

In der Fig. 5 ist das bestückte mehrphasige Strangsicherungs-Modul nach Fig. 4 perspektivisch dargestellt. In dieser Darstellung ist erkennbar, dass als Strangsicherung 2 entsprechend dem Stromlaufplan gemäß Fig. 1 zwei Sicherungen 52 und 66 vorgesehen sind, die elektrisch parallel geschaltet sind. Das heißt, an den Befestigungsfahnen 18 der Tragplatte 16 werden die Sicherungen 66 mechanisch befestigt, wogegen die Sicherungen 52 an den Befestigungsfahnen 18 der Tragplatte 42 mechanisch befestigt sind. Zur mechanischen Befestigung der Wechselstromschütze 54 sind die Befestigungsfahnen 20 der beiden Tragplatten 16 und 42 erforderlich.

Da das Stromschienenpaket 32 ausführlich in einer parallelen Patentanmeldung EP 2100350 beschrieben ist, wird an dieser Stelle auf die Beschreibung dieses Stromschienenpaketes 32 verzichtet. Dieses Stromschienenpaket 32 weist in dieser Darstellung drei zweiteilige Vorrichtungen 68 auf, die jeweils aus zwei U-förmigen ineinander greifbare Verschlussbügel bestehen. Jede der beiden Tragplatten 16 und 42 werden mit dieser zweiteiligen Vorrichtung 68 lösbar verbunden.

Damit durch Stromkräfte die oberen und unteren freien Enden der Schienen des Stromschienenpakets 32 nicht bewegt werden können, sind ein oberes und unteres Distanzstück 70 vorgesehen. Außerdem sind ein oberes und ein unteres Koppelelement 72 vorgesehen. Diese Koppelelemente 72 weisen mehrere nebeneinander liegende Nuten auf, die derart bemessen sind, dass die Isolierschienen des Stromschienenpakets 32 in diese gesteckt werden können. Dadurch stützen sich die beiden Koppelelemente 72 jeweils auf die Stromschienen des Stromschienenpaketes 32 ab, wodurch diese in ihrer Lage fixiert sind. Somit ist ein Verrutschen der Stromschienen innerhalb des Stromschienenpaketes 32 nicht möglich. Gegenüber diesen Nuten eines jeden Koppelelementes 72 weist jedes Koppelelement 72 eine Nut auf. In dieser Nut verläuft im montierten Zustand die rückwärtige Querstrebe 38 bzw. 40 der beiden Tragplatten 16 und 42.

Damit die Bestimmung von Luft- und Kriechstrecken eingehalten werden können, weist dieses mehrphasige Strangsicherungs-Modul mehrere Einrichtungen 74 auf, die zwischen stromführenden Teilen unterschiedlichen Potentials angeordnet sind.

Damit das mehrphasige Strangsicherungs-Modul eine geschlossene Einheit wird, sind mehrere Abdeckungen 76 vorgesehen, zwischen denen jeweils ein Versteifungsmittel 78 angeordnet sind. Diese Abdeckungen 76 werden mit den frontseitigen Befestigungsfahnen 24 der Tragplatte 16 und 42 lösbar verbunden. Damit die Bauelemente des mehrphasigen Strangsicherungs-Moduls zwischen den beiden Tragplatten 16 und 42 mittels Umgebungsluft gekühlt werden können (Konvektionskühlung), weisen diese Abdeckungen 76 jeweils einen Bereich mit Perforationen auf.

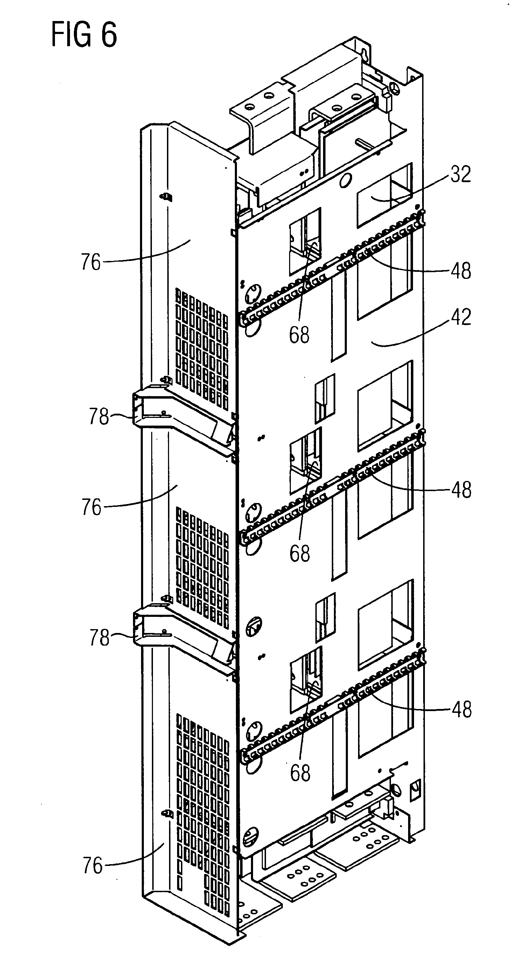

In der Fig. 6 ist ein montiertes mehrphasiges Strangsicherungs-Modul perspektivisch dargestellt. Dieser Darstellung kann entnommen werden, dass die Versteifungen 48 auf Höhe der zweiteiligen Vorrichtung 68 des Stromschienenpakets 32 auf eine Flachseite der Tragplatte 16 bzw. 42 angeordnet sind. In der oberen und unteren Stirnfläche des mehrphasigen Strangsicherungs-Moduls befinden sich die Anschlüsse der Wechselstrom-Zuleitung 6. Die Anschlüsse der Wechselstrom-Ableitungen 8 befinden sich in einer zur unteren Stirnfläche des mehrphasigen Strangsicherungs-Moduls parallelen Ebene oberhalb dieser Stirnfläche. Dadurch kann eine elektrische Einheit direkt rechts neben diesem mehrphasigen Strangsicherungs-Modul platziert und verdrahtet werden. Das mehrphasige Strangsicherungs-Modul ist durch den erfindungsgemäßen Aufbau besonders schmal. Das in der Fig. 6 dargestellte Strangsicherungs-Modul weist eine Breite von beispielsweise 200mm und eine Höhe von beispielsweise 1754mm auf.

Die Vorteile dieses erfindungsgemäßen mehrphasigen Strangsicherungs-Moduls bestehen in einer sehr platzsparenden Anordnung von Sicherungen 2 bzw. 52, 66, Schützen 4 bzw. 54 und von Stromschienen für größere Ströme in einem Gehäuse, wobei dieses Modul separat montiert und geprüft werden kann. Außerdem können Verschleißteile (Sicherungen, Schütze) mit geringem Aufwand gewechselt werden.

## Patentansprüche

1. Mehrphasiges Strangsicherungs-Modul mit zwei Tragplatten (16, 42) und pro Phase mit wenigstens einer Strangsicherung (52, 66), einem Wechselstromschütz (54), einer Wechselstrom-Zuleitung (6) und einer Wechselstrom-Ableitung (8), wobei als Zu- und Ableitungen (6, 8) Stromschienen vorgesehen sind, die ein Stromschienenpaket (32) mit stirn- und schmalseitigen Anschlüssen (56 58) bilden, wobei wenigstens eine Strangsicherung (52, 66) und ein Wechselstromschütz (54) einer jeden Phase räumlich übereinander angeordnet sind, wobei diese Phasenbaugruppen übereinander in Front der schmalseitigen Anschlüsse (56, 58) des Strömschienenpaketes (32) zwischen den beiden Tragplatten (16, 42), die jeweils mit einer Flachseite des Stromschienenpaketes (32) verbunden sind, angeordnet und mit diesen schmalseitigen Anschlüssen (56, 58) elektrisch leitend verbunden sind, und wobei diese Phasenbaugruppen frontseitig mit einer Abdeckung versehen sind.

2. Mehrphasiges Strangsicherungs-Modul nach Anspruch 1, **dadurch gekennzeichnet, dass** die Tragplatte (16, 42) Befestigungsfahnen (18, 20) für die Strangsicherungen (52, 66) und der Wechselstromschütze (54) der Phasenbaugruppen aufweist.

3. Mehrphasiges Strangsicherungs-Modul nach Anspruch 1 oder 2, **dadurch gekennzeichnet, dass** die Tragplatte (16, 42) eine rückwärtige Befestigungsfahne (22) mit wenigstens zwei Bohrungen (30) aufweist.

4. Mehrphasiges Strangsicherungs-Modul nach einem der vorgenannten Ansprüche, **dadurch gekennzeichnet, dass** die Tragplatte (16, 42) frontseitig eine Befestigungsfahne (24) mit Befestigungsmitteln für die Abdeckung aufweist.

5. Mehrphasiges Strangsicherungs-Modul nach einem der vorgenannten Ansprüche, **dadurch gekennzeichnet, dass** die Abdeckung mit Versteifungsmitteln versehen ist.

6. Mehrphasiges Strangsicherungs-Modul nach einem der vorgenannten Ansprüche, **dadurch gekennzeichnet, dass** jede Phasenbaugruppe frontseitig mit einer Abdeckung (76) versehen ist.

7. Mehrphasiges Strangsicherungs-Modul nach Anspruch 6, **dadurch gekennzeichnet, dass** jeweils zwischen zwei Abdeckungen (76) ein Versteifungsmittel (78) angeordnet ist.

8. Mehrphasiges Strangsicherungs-Modul nach einem der vorgenannten Ansprüche, **dadurch gekennzeichnet, dass** die Tragplatte (16, 42) auf seiner außenseitigen Flachseite (50) mehrere Versteifungsmittel (48) aufweist.

9. Mehrphasiges Strangsicherungs-Modul nach einem der vorgenannten Ansprüche, **dadurch gekennzeichnet, dass** zur Lagefixierung des Stromschienenpaketes (32) zwischen den beiden Tragplatten (16, 42) ein Koppelelement (72) vorgesehen ist, das einerseits kammartig ausgeführt ist und andererseits eine Nut aufweist.

10. Mehrphasiges Strangsicherungs-Modul nach einem der vorgenannten Ansprüche, **dadurch gekennzeichnet, dass** zwischen stromführenden Teilen unterschiedlichen Potentials Einrichtungen (74) zur Erhöhung von Luft- und Kriechstrecken vorgesehen sind.

11. Mehrphasiges Strangsicherungs-Modul nach einem der vorgenannten Ansprüche, **dadurch gekennzeichnet, dass** die Tragplatten (16, 42) jeweils aus Metall sind.

## Claims

1. Polyphase line protection module having two mounting panels (16, 42) and, per phase, having at least one line protection device (52, 66), an AC contactor (54), an AC supply line (6) and an AC output line (8), with busbars being provided as supply and output lines (6, 8) and forming a busbar pack (32) with connections (56, 58) on the end and narrow faces, with at least one line protection device (52, 66) and an AC contactor (54) of each phase being arranged physically one above the other, with these phase assemblies being arranged one above the other in front of the narrow-face connections (56, 58) of the busbar pack (32) between the two mounting panels (16, 42), which are each connected to one flat face of the busbar pack (32) and being electrically conductively connected to these narrow-face connections (56, 58), and with these phase assemblies being provided with a cover on the front face.

2. Polyphase line protection module according to Claim 1, **characterized in that** the mounting panel (16, 42) has attachment tabs (18, 20) for the line protection devices (52, 66) and the AC contactors (54) of the phase assemblies.

3. Polyphase line protection module according to Claim 1 or 2, **characterized in that** the mounting panel (16, 42) has a rearward attachment tab (22) with at least two holes (30).

4. Polyphase line protection module according to one of the abovementioned claims, **characterized in that** the mounting panel (16, 42) has an attachment tab (24) with attachment means for the cover on the front face.

5. Polyphase line protection module according to one of the abovementioned claims, **characterized in that** the cover is provided with reinforcing means.

6. Polyphase line protection module according to one of the abovementioned claims, **characterized in that** each phase assembly is provided with a cover (76) on the front face.

7. Polyphase line protection module according to Claim 6, **characterized in that** a reinforcing means (78) is in each case arranged between two covers (76).

8. Polyphase line protection module according to one of the abovementioned claims, **characterized in that** the mounting panel (16, 42) has a plurality of reinforcing means (48) on its outside flat face (50).

9. Polyphase line protection module according to one of the abovementioned claims, **characterized in that** a coupling element (72) is provided in order to fix the position of the busbar pack (32) between the two mounting panels (16, 42), is designed like a comb on one side and has a groove on the other side.

10. Polyphase line protection module according to one of the abovementioned claims, **characterized in that** devices (74) for increasing the air gaps and creepage distances are provided between live parts at different potentials.

11. Polyphase line protection module according to one of the abovementioned claims, **characterized in that** the mounting panels (16, 42) are each composed of metal.

## Revendications

1. Module de fusible de ligne à plusieurs phases, comprenant deux plaques ( 16, 42 ) supports et par phase au moins un fusible ( 52, 66 ) de ligne, un contacteur ( 54 ) à courant alternatif, une ligne ( 6 ) d'entrée du courant alternatif et une ligne ( 8 ) de sortie du courant alternatif, dans lequel il est prévu, comme lignes ( 6, 8 ) d'entrée et de sortie, des barres conductrices, qui forment un paquet ( 32 ) de barres conductrices ayant des bornes ( 56, 58 ) du côté frontal et du côté étroit, dans lequel au moins un fusible ( 52, 66 ) de fil et un commutateur ( 54 ) à courant alternatif de l'une de chaque phase sont disposés l'un au-dessus de l'autre dans l'espace, dans lequel ces composants de phase sont disposés l'un au-dessus de l'autre en avant des bornes ( 56, 58 ) du côté étroit du paquet ( 32 ) de barres conductrices entre les deux plaques ( 16, 42 ) supports, qui sont reliées respectivement à un côté plat du paquet ( 32 ) de barres conductrices et sont reliées d'une manière conductrice de l'électricité à ces bornes ( 56, 58 ) du côté étroit, et dans lequel ces composants de phase sont munis du côté avant d'un recouvrement.

2. Module de fusible de fil à plusieurs phases suivant la revendication 1, **caractérisé en ce que** la plaque ( 16, 42 ) support a des talons ( 18, 20 ) de fixation des fusibles ( 52, 66 ) de fil et des contacteurs ( 54 ) à courant alternatif des composants de phase.

3. Module de fusible de fil à plusieurs phases suivant la revendication 1 ou 2, **caractérisé en ce que** la plaque ( 16, 42 ) support a un talon ( 22 ) de fixation vers l'arrière ayant au moins deux trous ( 30 ).

4. Module de fusible de fil à plusieurs phases suivant l'une des revendications précédentes, **caractérisé en ce que** la plaque ( 16, 42 ) support a, du côté avant, un onglet ( 24 ) de fixation ayant des moyens de fixation du recouvrement.

5. Module de fusible de fil à plusieurs phases suivant l'une des revendications précédentes, **caractérisé en ce que** le recouvrement est pourvu de moyens de rigidification.

6. Module de fusible de fil à plusieurs phases suivant l'une des revendications précédentes, **caractérisé en ce que** chaque composant de phase est pourvu du côté avant d'un recouvrement ( 76 ).

7. Module de fusible de fil à plusieurs phases suivant la revendication 6, **caractérisé en ce qu'**un moyen ( 78 ) de raidissement est disposé respectivement entre deux recouvrements ( 76 ).

8. Module de fusible de fil à plusieurs phases suivant l'une des revendications précédentes, **caractérisé en ce que** la plaque ( 16, 42 ) support a plusieurs moyens ( 48 ) de raidissement sur son côté ( 50 ) plat du côté de l'extérieur.

9. Module de fusible de fil à plusieurs phases suivant l'une des revendications précédentes, **caractérisé en ce que**, pour l'immobilisation en position du paquet (32) de barres conductrices entre les deux plaques ( 16, 42 ) supports, il est prévu un élément ( 62 ) de couplage, qui est réalisé, d'une part, en forme de peigne et qui a, d'autre part, une rainure.

10. Module de fusible de fil à plusieurs phases suivant l'une des revendications précédentes, **caractérisé en ce qu'**il est prévu, entre des parties conduisant le courant de potentiel différent, des dispositifs ( 74 ) pour augmenter des espaces d'air et des zones de fuite.

11. Module de fusible de fil à plusieurs phases suivant l'une des revendications précédentes, **caractérisé en ce que** les plaques ( 16, 42 ) supports sont respectivement en métal.
